# EUROPÄISCHE PATENTANMELDUNG

(11) **EP 3 474 101 A1**
(43) Veröffentlichungstag der Anmeldung: **24.04.2019**
(21) Anmeldenummer: 17197147.6
(22) Anmeldetag: 18.10.2017
(51) Int. Cl.: G05B 19/418, G06Q 10/00, G06Q 10/06

(54) **VORRICHTUNG UND VERFAHREN ZUR ANSTEUERUNG UND VERWALTUNG VON KOMPONENTEN EINER INDUSTRIEANLAGE**

(71) Anmelder: IBN Systems GmbH, 86825 Bad Wörishofen (DE)
(72) Erfinder: MIKULINA, Igor, 86825 Bad Wörishofen (DE); KERNSCHMIDT, Konstantin Emanuel Thassilo, 86825 Bad Wörishofen (DE)
(74) Vertreter: TBK

(57) **Zusammenfassung**

Maßnahmen bzw. Mittel zur Realisierung einer Ansteuerung und Verwaltung von Komponenten einer Industrieanlage werden bereitgestellt. Solche Maßnahmen bzw. Mittel umfassen beispielhaft ein Speichern eines Fähigkeitsverzeichnisses, wobei das Fähigkeitsverzeichnis zumindest einen hinterlegten statischen Komponentenparameter, der für eine Eigenschaft der Industrieanlagenkomponente steht, eine Komponentenbetriebswertspezifizierung zumindest eines durch die Industrieanlagenkomponente zu erfassenden dynamischen Komponentenbetriebswerts, der für einen Zustand der Industrieanlagenkomponente steht, und zumindest eine Synthesemethode zur Generierung von Informationen basierend auf zumindest einem durch das Fähigkeitsverzeichnis spezifizierten dynamischen Komponentenbetriebswert aufweist, und ein Generieren, mittels einer aus der zumindest einen Synthesemethode, von Informationen für eine Ansteuerung und/oder Verwaltung der Industrieanlagenkomponente.

## Beschreibung

### Technisches Gebiet

Die vorliegende Erfindung bezieht sich auf Ansteuerung und Verwaltung von Komponenten einer Industrieanlage. Insbesondere bezieht sich die vorliegende Erfindung auf Maßnahmen (einschließlich Verfahren, Vorrichtungen, und Computerprogrammprodukten) zur Realisierung einer Ansteuerung und Verwaltung von Komponenten einer Industrieanlage. Beispielhaft bezieht sich die vorliegende Erfindung auf eine Vorrichtung und ein Verfahren zur Ansteuerung und Verwaltung von Komponenten einer Industrieanlage in einer Industrie-4.0-Umgebung.

### Hintergrund

Immer mehr mittelständische Unternehmen erkennen die Chancen und Vorteile von Industrie 4.0, um ihre langfristige Wettbewerbsfähigkeit zu sichern. Bisher angebotene Industrie-4.0-Lösungen erfüllen dabei häufig jedoch nicht die spezifischen Anforderungen für den Mittelstand. Dies gilt sowohl für mittelständische Hersteller von Anlagen, Vorrichtungen und Komponenten, die "Industrie-4.0-fähige" Produkte entwickeln wollen, als auch für Betreiber mittelständischer verarbeitender Betriebe, die ihr Unternehmen digitalisieren möchten.

Eine Zusammenfassung einiger dieser Anforderungen wird nachfolgend gegeben.

Eine Anforderung betrifft die herstellerübergreifende Integration verschiedener Systeme. Insbesondere in mittelständischen Betrieben werden üblicherweise Anlagen, Vorrichtungen und Komponenten von unterschiedlichen, spezialisierten Herstellern eingesetzt. Um die Mehrwerte einer Digitalisierung, wie z.B. intelligentes Energiemanagement oder Predictive Maintenance, systemübergreifend zu nutzen, ist es notwendig, dass nicht nur jedes einzelne System "Industrie-4.0-fähig" ist, sondern dass die verschiedenen Systeme interoperabel sind und der Betreiber eine transparente Übersicht über alle Systeme seines Unternehmens erhält. Monopolistische Industrie-4.0-Lösungen einzelner Unternehmen sind daher für eine unternehmensweite Kopplung unterschiedlichster Systeme nicht geeignet.

Eine weitere Anforderung betrifft die Einhaltung von Vorschriften und Standards im Maschinen- und Anlagenbau. Hersteller im Maschinen- und Anlagenbau sind verpflichtet, die für ihre Systeme geltenden Vorschriften (z.B. CE-Konformität, Maschinenrichtlinien) einzuhalten und können bei Verstößen entsprechend haftbar gemacht werden. Sowohl für die Hersteller als auch für die Betreiber ist es daher von essentieller Bedeutung, dass klar definiert ist, welche Aktionen (z.B. Ausschalten einer Komponente, um Energie zu sparen) durch welches System ausgeführt werden darf. Eine direkte, unkontrollierte Vernetzung und Ansteuerung auf unterster Komponentenebene ist daher zur Gewährleistung von Safety- und Security-Anforderungen und aus der Haftungsperspektive heraus nicht realisierbar.

Eine weitere Anforderung betrifft die lokale Konfiguration einer aus dem Industrie-4.0-Kontext bekannten Smart Factory nach spezifischen Gegebenheiten. Die Konfiguration einer (digitalen) Produktion ist immer abhängig von spezifischen Randbedingungen (z.B. landesspezifische Gesetze für Grenzwerte, Klima, Größe der Produktionshalle, etc.). Durch Modernisierung oder Wachstum kommt es zudem häufig vor, dass sich die ursprüngliche Konfiguration im Laufe der Zeit ändert. Der Betreiber muss daher in der Lage sein, die Beziehungen zwischen den verschiedenen Industrie-4.0-Produkten zu definieren. Zudem sollte der Betreiber selbst entscheiden können, welche Drittanbieterapplikationen und Dienste (beispielsweise Cloud-Dienste) er in Anspruch nehmen möchte, bzw. welche Daten er den jeweiligen Herstellern (z.B. zu Wartungszwecken) zur Verfügung stellen möchte. Eine direkte Vernetzung der verschiedenen Systeme mit den Clouds der jeweiligen Hersteller kann eine solche Konfiguration nicht ermöglichen. Zudem ist so für den Betreiber häufig nicht ersichtlich, welche Daten übertragen werden (was wiederum Auswirkungen auf die vorgenannte Haftung Einfluss haben kann).

Weitere Anforderungen werden an die Interoperabilität gestellt. Insbesondere aus Vorgenanntem ist ersichtlich, dass ein reibungsloser und damit weitestgehend automatisierter Fluss von Informationen vorausgesetzt wird. Aufbauend auf der Integrierbarkeit beschreibt Interoperabilität die Fähigkeit der Komponenten, basierend auf einem gemeinsamen konzeptionellen Modell Informationen und digitale Services miteinander auszutauschen sowie die Interpretation der Information im Kontext zu ermöglichen. Dies beinhaltet den automatischen oder automatisierten Informationsaustausch. Die Interoperabilität ist also keine Maßnahme, sondern eine Eigenschaft oder ein Zustand, also eine Fähigkeit.

Interoperabilität bedeutet im Kontext Industrie 4.0 ausdrücklich auch, branchenübergreifend kommunizieren und interoperieren zu können. Diese notwendige Interoperabilität ist heute nicht gegeben. In mangelnder Interoperabilität der jeweils beteiligten Einzelkomponenten kann dabei eine der Barrieren für die Funktionsfähigkeit komplexer Informations- und Kommunikationstechnik-Systeme (IKT-Systeme) gesehen werden. Die Entwicklung von Kriterien zur Nutzung und zum Austausch von Daten unter mehreren Marktakteuren ist darum im Fokus von branchenübergreifenden Initiativen und der Forschungsförderung.

Ungeachtet dessen werden in mangelnder Interoperabilität auch vereinzelt Vorteile gesehen. Begünstigt durch dieses Defizit werden i.d.R. diejenigen Anbieter, deren Systeme den Markt bestimmen, da es mangelnde Interoperabilität ermöglicht, andere Anbieter auszuschließen. Interoperabilität ist daher ein wichtiger Mechanismus, bestehende wirtschaftlich-technische Abhängigkeiten abzubauen.

Interoperabilität im Sinne der funktionalen Kompatibilität beinhaltet unter anderem die Gerätemerkmale Kommunikationsprotokoll, Kommunikationsinterface, Datenzugriff, Datentypen, Parametersemantik und Anwendungsfunktionalität. Interoperabilität bezeichnet somit die Fähigkeit eines Systems oder eines Produkts, mit anderen Systemen oder Produkten ohne spezifischen Aufwand seitens des Kunden zusammenzuarbeiten.

### Zusammenfassung

Verschiedene beispielhafte Ausführungsbeispiele der vorliegenden Erfindung zielen auf ein Angehen von zumindest Teilen der vorstehend genannten Belange und/oder Probleme und Nachteile. Insbesondere erfüllen verschiedene beispielhafte Ausführungsbeispiele der vorliegenden Erfindung zumindest Teile der vorstehend ausgeführten Anforderungen.

Verschiedene Aspekte beispielhafter Ausführungsbeispiele der vorliegenden Erfindung sind in den angehängten Ansprüchen dargelegt.

Gemäß einem ersten Aspekt der vorliegenden Erfindung wird eine Vorrichtung zur Ansteuerung und Verwaltung einer Industrieanlagenkomponente bereitgestellt, mit
einem Speicher, der dazu eingerichtet ist, um ein Fähigkeitsverzeichnis zu speichern, wobei das Fähigkeitsverzeichnis umfasst
   zumindest einen hinterlegten statischen Komponentenparameter, der für eine Eigenschaft der Industrieanlagenkomponente steht,
   eine Komponentenbetriebswertspezifizierung zumindest eines durch die Industrieanlagenkomponente zu erfassenden dynamischen Komponentenbetriebswerts, der für einen Zustand der Industrieanlagenkomponente steht, und
   zumindest eine Synthesemethode zur Generierung von Informationen basierend auf zumindest einem durch das Fähigkeitsverzeichnis spezifizierten dynamischen Komponentenbetriebswert, und mit
einer Steuereinrichtung, die dazu eingerichtet ist, um mittels einer aus der zumindest einen Synthesemethode Informationen für eine Ansteuerung und/oder Verwaltung der Industrieanlagenkomponente zu generieren.

Gemäß einem zweiten Aspekt der vorliegenden Erfindung wird ein Verfahren zur Ansteuerung und Verwaltung einer Industrieanlagenkomponente bereitgestellt, mit
einem Speichern eines Fähigkeitsverzeichnisses, wobei das Fähigkeitsverzeichnis umfasst
   zumindest einen hinterlegten statischen Komponentenparameter, der für eine Eigenschaft der Industrieanlagenkomponente steht,
   eine Komponentenbetriebswertspezifizierung zumindest eines durch die Industrieanlagenkomponente zu erfassenden dynamischen Komponentenbetriebswerts, der für einen Zustand der Industrieanlagenkomponente steht, und
   zumindest eine Synthesemethode zur Generierung von Informationen basierend auf zumindest einem durch das Fähigkeitsverzeichnis spezifizierten dynamischen Komponentenbetriebswert, und
einem Generieren, mittels einer aus der zumindest einen Synthesemethode, von Informationen für eine Ansteuerung und/oder Verwaltung der Industrieanlagenkomponente.

Gemäß einem dritten Aspekt der vorliegenden Erfindung wird eine Vorrichtung zur Ansteuerung und Verwaltung einer Industrieanlagenkomponente bereitgestellt, mit
zumindest einem Prozessor,
zumindest einem Speicher einschließlich einem Computerprogramm-Code,
zumindest einer Schnittstelle, die zur Kommunikation mit zumindest einer anderen Vorrichtung eingerichtet ist,
wobei der zumindest eine Prozessor mit dem zumindest einen Speicher und dem Computerprogramm-Code dazu eingerichtet ist, die Vorrichtung dazu zu bringen, die folgenden Schritte auszuführen:
   ein Speichern eines Fähigkeitsverzeichnisses, wobei das Fähigkeitsverzeichnis umfasst
      zumindest einen hinterlegten statischen Komponentenparameter, der für eine Eigenschaft der Industrieanlagenkomponente steht,
      eine Komponentenbetriebswertspezifizierung zumindest eines durch die Industrieanlagenkomponente zu erfassenden dynamischen Komponentenbetriebswerts, der für einen Zustand der Industrieanlagenkomponente steht, und
      zumindest eine Synthesemethode zur Generierung von Informationen basierend auf zumindest einem durch das Fähigkeitsverzeichnis spezifizierten dynamischen Komponentenbetriebswert, und
   ein Generieren, mittels einer aus der zumindest einen Synthesemethode, von Informationen für eine Ansteuerung und/oder Verwaltung der Industrieanlagenkomponente.

Gemäß einem vierten Aspekt der vorliegenden Erfindung wird ein Computerprogrammprodukt mit einem computerausführbaren Computerprogramm-Code bereitgestellt, der, wenn das Programm auf einem Computer (beispielsweise einem Computer einer Vorrichtung gemäß einem vorgenannten vorrichtungsbezogenen Aspekt der vorliegenden Erfindung) ausgeführt wird, dazu eingerichtet ist, um den Computer dazu zu bringen, das Verfahren gemäß einem vorgenannten verfahrensbezogenen Aspekt der vorliegenden Erfindung auszuführen.

Ein solches Computerprogrammprodukt kann ein computerlesbares Medium umfassen, auf dem der computerausführbare Computerprogramm-Code gespeichert ist. Das Programm kann direkt in einen internen Speicher des Computers oder einen Prozessor des Computers ladbar sein.

Jeder der vorgenannten Aspekte ermöglicht es, vorstehend diskutierten Anforderungen gerecht zu werden um dadurch zumindest einen Teil der in Bezug auf den Stand der Technik identifizierten Probleme und Nachteile zu lösen.

### Kurze Beschreibung der Zeichnungen

Figur 1 ist ein Blockdiagramm, das eine Vorrichtung gemäß beispielhafter Ausführungsbeispiele der vorliegenden Erfindung veranschaulicht,
Figur 2 ist ein Blockdiagramm, das eine Vorrichtung gemäß beispielhafter Ausführungsbeispiele der vorliegenden Erfindung veranschaulicht,
Figur 3 ist ein schematisches Diagramm einer Prozedur gemäß beispielhafter Ausführungsbeispiele der vorliegenden Erfindung,
Figur 4 ist ein schematisches Diagramm, das einen Schnittstellenspeicher gemäß beispielhafter Ausführungsbeispiele der vorliegenden Erfindung veranschaulicht,
Figur 5 (Figur 5(A) und 5(B)) ist ein schematisches Diagramm, das ein Fähigkeitsverzeichnis gemäß beispielhafter Ausführungsbeispiele der vorliegenden Erfindung veranschaulicht,
Figur 6 ist ein schematisches Diagramm, das einen Zusammenhang zwischen Industrieanlagenkomponenten und Industrieanlagensubkomponenten zugeordneten Fähigkeitsverzeichnissen gemäß beispielhafter Ausführungsbeispiele der vorliegenden Erfindung veranschaulicht,
Figur 7 ist ein schematisches Diagramm, das einen Zugriff auf den Schnittstellenspeicher anhand von Fähigkeitsverzeichnissen gemäß beispielhafter Ausführungsbeispiele der vorliegenden Erfindung veranschaulicht,
Figur 8 ist ein Blockdiagramm, das eine alternative Veranschaulichung von Vorrichtungen gemäß beispielhafter Ausführungsbeispiele der vorliegenden Erfindung zeigt,
Figur 9 ist ein schematisches Diagramm, das einen Zusammenhang zwischen Industrieanlagenkomponenten und Industrieanlagensubkomponenten und den Industrieanlagenkomponenten und Industrieanlagensubkomponenten zugeordneten Vorrichtungen zur Ansteuerung und Verwaltung der jeweiligen Komponente gemäß beispielhafter Ausführungsbeispiele der vorliegenden Erfindung veranschaulicht, und
Figur 10 ist ein schematisches Diagramm, das ein Ergebnis einer Erweiterung des Standard-Datenmodells in Bezug auf OPC UA veranschaulicht.

### Detaillierte Beschreibung von Zeichnungen und Ausführungsbeispielen der vorliegenden Erfindung

Die vorliegende Erfindung wird hiernach unter Bezugnahme auf bestimmte, nicht einschränkende Beispiele und auf gegenwärtig vorstellbare Ausführungsbeispiele der vorliegenden Erfindung beschrieben. Der Fachmann wird erkennen, dass die Erfindung in keiner Weise auf diese zur Veranschaulichung dienenden Beispiele beschränkt und breiter als diese Beispiele zu verstehen ist.

Insbesondere wird die vorliegende Erfindung im Kontext von Industrie 4.0 beschrieben. Zwar ist die Implementierung in einer solchen Umgebung eine bevorzugte Ausführungsform der vorliegenden Erfindung, die vorliegende Erfindung ist jedoch nicht darauf beschränkt. Insbesondere kann die Erfindung in jeder anderen Umgebung implementiert sein, solange dies mit den hierin beschriebenen Merkmalen vereinbar ist.

Hiernach werden verschiedene Ausführungsbeispiele und Implementierungen der vorliegenden Erfindung und deren Aspekte unter Verwendung verschiedener Varianten und/oder Alternativen beschrieben. Alle der beschriebenen Varianten und/oder Alternativen können allein oder in jeder vorstellbaren Kombination (einschließlich Kombinationen einzelner Merkmale der verschiedenen Varianten und/oder Alternativen) vorgesehen sein.

Allgemein werden gemäß beispielhafter Ausführungsbeispiele der vorliegenden Erfindung Vorrichtungen und Verfahren zur Ansteuerung und Verwaltung von Komponenten einer Industrieanlage bereitgestellt.

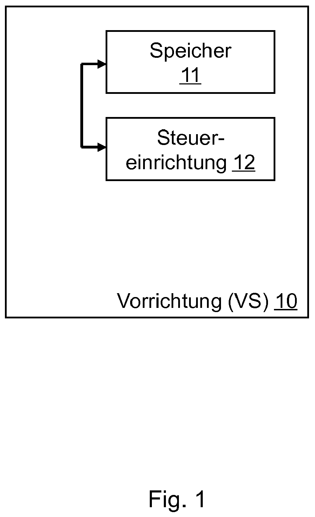

Figur 1 ist ein Blockdiagramm, das eine Vorrichtung gemäß beispielhafter Ausführungsbeispiele der vorliegenden Erfindung veranschaulicht. Die Vorrichtung 10 kann im Folgenden als eine Verwaltungsschale (VS) bereitstellend bezeichnet werden. Dies beinhaltet beispielsweise Vorrichtungen, die eine solche Verwaltungsschale und deren Funktionalitäten wie nachstehend beschrieben bereitstellen. Wenn im Folgenden eine Verwaltungsschale genannt wird, dann bezieht sich dies immer auf die erfindungsgemäße Vorrichtung bzw. das erfindungsgemäße Verfahren, die die Verwaltungsschale verkörpern bzw. deren Funktionalitäten bereitstellen.

Die Vorrichtung 10 kann einen Speicher 11 und eine Steuereinrichtung 12 aufweisen. Der Speicher 11 speichert ein Fähigkeitsverzeichnis. Das Fähigkeitsverzeichnis umfasst zumindest einen hinterlegten statischen Komponentenparameter, der für eine Eigenschaft der Industrieanlagenkomponente steht, eine Komponentenbetriebswertspezifizierung zumindest eines durch die Industrieanlagenkomponente zu erfassenden dynamischen Komponentenbetriebswerts, der für einen Zustand der Industrieanlagenkomponente steht, und zumindest eine Synthesemethode zur Generierung von Informationen basierend auf zumindest einem durch das Fähigkeitsverzeichnis spezifizierten dynamischen Komponentenbetriebswert. Die Steuereinrichtung 12 generiert mittels einer aus der zumindest einen Synthesemethode Informationen für eine Ansteuerung und/oder Verwaltung der Industrieanlagenkomponente.

Das Fähigkeitsverzeichnis wird im Folgenden auch Methodenliste genannt und entspricht einer Aufstellung von Merkmalen und Fähigkeiten der zugeordneten Industrieanlagenkomponente.

Industrieanlagenkomponenten gemäß der vorliegenden Spezifikation werden auch als Assets bezeichnet und umfassen beispielsweise insbesondere Anlagengegenstände und Anlageneinzelteile, elektronischen Baugruppen, Teilsysteme und Systeme, Maschinen, Anlagen und Anlagenverbünde. Assets können jedoch beispielsweise auch auf Dienste, Konzepte und Ideen, Pläne, Archive, und Programme ausgeweitet werden.

Das Asset wird durch seine Verwaltungsschale repräsentiert.

Statische Komponentenparameter sind beispielsweise Angaben zu einem Temperaturarbeitsbereich (beispielsweise untere und obere Grenze), Angaben zu vorgeschriebenen Wartungsintervallen, und Angaben zu Hersteller, Typ und Kategorie einer Industrieanlagenkomponente. Die statischen Komponentenparameter sind jedoch nicht auf die genannten Beispiele beschränkt

Dynamische Komponentenbetriebswerte, die für einen Zustand der Industrieanlagenkomponente stehen, sind beispielsweise eine Temperatur, eine Betriebsdauer, ein Zeitpunkt eines letzten Fehlers, und eine Drehzahl. Die dynamischen Komponentenbetriebswerte sind jedoch nicht auf die genannten Beispiele beschränkt, sondern beziehen sich allgemein insbesondere auf die Erfassung von Maschinendaten, also industrieanlagenkomponentenbezogene Ist-Daten und fertigungsbezogene Ist-Daten.

Eine Komponentenbetriebswertspezifizierung umfasst beispielsweise die Angabe des jeweiligen dynamischen Komponentenbetriebswerts, kann jedoch auch beispielsweise Erfassungsintervalle oder Bereitstellungsintervalle des jeweiligen dynamischen Komponentenbetriebswerts und vergleichbare Eigenschaften im Zusammenhang mit dynamischen Komponentenbetriebswerten umfassen.

Synthesemethoden zur Generierung von Informationen umfassen eine Verarbeitung, eine Analyse, eine Fusion, eine Interpretation und eine Synthetisierung von eingehenden Größen und sind beispielsweise eine Bestimmung, ob sich eine aktuelle Temperatur eines Assets im Arbeitsbereich des Assets (Industrieanlagenkomponente) befindet, basierend auf einer (gemessenen) aktuellen Temperatur der Industrieanlagenkomponente und einem vorgegebenen Temperaturarbeitsbereich mit dem Ergebnis, dass sich die Temperatur im Normalbereich oder in einem Anormalbereich befindet, eine Bestimmung einer Effizienz einer Industrieanlagenkomponente basierend auf einer Betriebsdauer und einer geplanten Ausgabemenge (Produktionsmenge) und einer Ist-Ausgabemenge (Ist-Produktionsmenge), eine Bestimmung einer mittleren Betriebsdauer zwischen Ausfällen basierend auf einer Betriebsdauer und einer Außerbetriebszeit und einem Zeitpunkt eines letzten Fehlers, und eine Bestimmung eines Fälligkeitszeitpunktes einer nächsten Wartung basierend auf verstrichenen Betriebsstunden des Assets und einer geplanten zukünftigen Auslastung und Vorgaben zu Wartungsintervallen. Die Synthesemethoden und die dadurch generierten Informationen sind jedoch nicht auf die oben dargestellten Beispiele beschränkt.

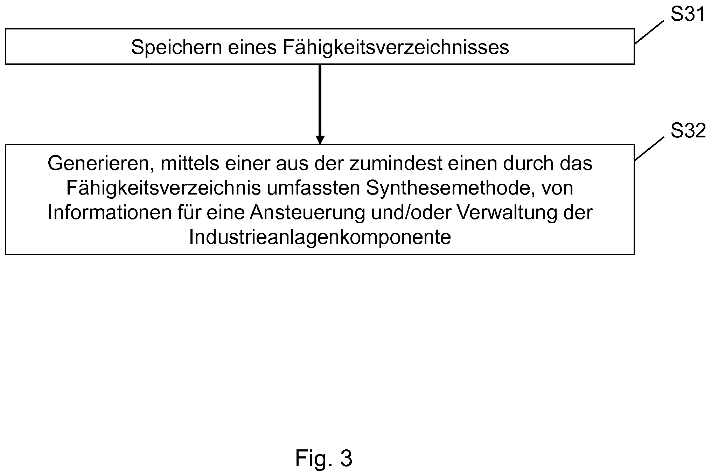

Figur 3 ist ein schematisches Diagramm eines Verfahrens gemäß beispielhafter Ausführungsbeispiele der vorliegenden Erfindung. Die Vorrichtung der Figur 1 kann das Verfahren der Figur 3 durchführen (kann dazu eingerichtet sein, um das Verfahren der Figur 3 durchzuführen), ist jedoch nicht auf dieses Verfahren beschränkt. Das Verfahren der Figur 3 kann durch die Vorrichtung der Figur 1 durchgeführt werden, ist jedoch nicht darauf beschränkt, durch diese Vorrichtung durchgeführt zu werden.

Wie in Figur 3 veranschaulicht umfasst ein Verfahren gemäß beispielhaften Ausführungsbeispielen der vorliegenden Erfindung einen Schritt eines Speicherns (S31) eines Fähigkeitsverzeichnisses, wobei das Fähigkeitsverzeichnis zumindest einen hinterlegten statischen Komponentenparameter, der für eine Eigenschaft der Industrieanlagenkomponente steht, eine Komponentenbetriebswertspezifizierung zumindest eines durch die Industrieanlagenkomponente zu erfassenden dynamischen Komponentenbetriebswerts, der für einen Zustand der Industrieanlagenkomponente steht, und zumindest eine Synthesemethode zur Generierung von Informationen basierend auf zumindest einem durch das Fähigkeitsverzeichnis spezifizierten dynamischen Komponentenbetriebswert umfasst, und einen Schritt eines Generierens (S32) von Informationen für eine Ansteuerung und/oder Verwaltung der Industrieanlagenkomponente mittels einer aus der zumindest einen Synthesemethode.

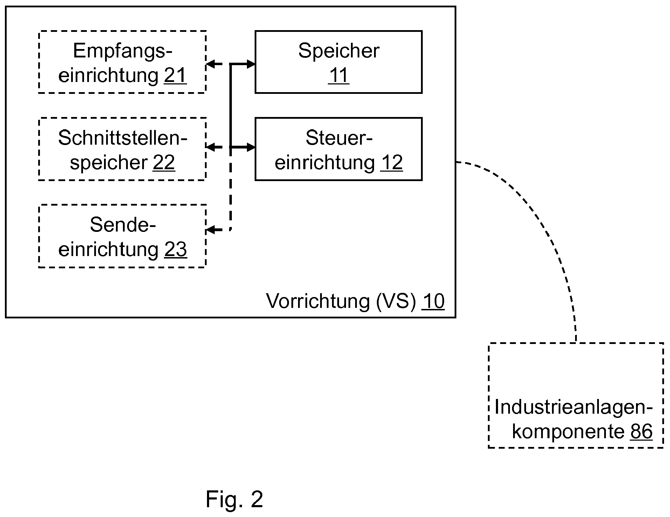

Figur 2 ist ein Blockdiagramm, das eine Vorrichtung gemäß beispielhafter Ausführungsbeispiele der vorliegenden Erfindung veranschaulicht. Insbesondere veranschaulicht Figur 2 eine Abwandlung der in Figur 1 veranschaulichten Vorrichtung. Die Vorrichtung gemäß Figur 2 kann daher ferner eine Empfangseinrichtung 21, einen Schnittstellenspeicher 22, und/oder eine Sendeeinrichtung 23 aufweisen, wie nachstehend detaillierter beschrieben wird.

Zudem kann die Vorrichtung 10 mit einer Industrieanlagenkomponente 86 (bevorzugt mit der ihr zugeordneten Industrieanlagenkomponente 86) verbunden sein.

Insbesondere kann bei der Vorrichtung die Steuereinrichtung 12 ferner dazu eingerichtet sein, um die Informationen mittels der Synthesemethode basierend auf dem zumindest einen dynamischen Komponentenbetriebswert und zumindest einem in dem Fähigkeitsverzeichnis hinterlegten statischen Komponentenparameter zu generieren.

Ferner kann bei der Vorrichtung das Fähigkeitsverzeichnis ferner ein Identifizierungszeichen der Industrieanlagenkomponente und ein Identifizierungszeichen der Vorrichtung umfassen.

Zudem kann bei der Vorrichtung die Komponentenbetriebswertspezifizierung ferner einen Aktualisierungszyklus des dynamischen Komponentenbetriebswerts umfassen.

Zudem kann bei der Vorrichtung das Fähigkeitsverzeichnis ferner Empfängerberechtigungsinformation bezüglich zumindest einem dynamischen Komponentenbetriebswert, zumindest einer Synthesemethode, und/oder zumindest einer generierten Information, und/oder zumindest eine Eingriffsmethode zum Eingriff in einen Betrieb der Industrieanlagenkomponente und Empfängerberechtigungsinformation bezüglich zumindest der einen Eingriffsmethode umfassen.

Außerdem kann die Vorrichtung eine Empfangseinrichtung 21 aufweisen, die dazu eingerichtet ist, um einen Schlüssel zu empfangen, wobei der Schlüssel das Fähigkeitsverzeichnis und ein Identifizierungszeichen der Industrieanlagenkomponente umfasst.

Zudem kann bei der Vorrichtung der Schlüssel ferner eine Austauschdatenfeldspezifizierung für mit der Industrieanlagenkomponente auszutauschenden Daten umfassen.

Außerdem kann die Vorrichtung einen Schnittstellenspeicher 22 mit einem ersten Speicherbereich, der durch die Vorrichtung beschreibbar und durch die Industrieanlagenkomponente lesbar ist, und einem zweiten Speicherbereich, der durch die Industrieanlagenkomponente beschreibbar und durch die Vorrichtung lesbar ist, umfassen, wobei der erste Speicherbereich und der zweite Speicherbereich jeweils gemäß der Austauschdatenspezifizierung strukturiert ist, und die Austauschdatenfeldspezifizierung Austauschdatenfelder entsprechend in dem Fähigkeitsverzeichnis spezifizierten dynamischen Komponentenbetriebswerten umfasst.

Zudem kann bei der Vorrichtung die Austauschdatenfeldspezifizierung ferner Austauschdatenfelder entsprechend in dem Fähigkeitsverzeichnis spezifizierten Eingriffsmethoden umfassen und die Steuereinrichtung ferner dazu eingerichtet sein, um die zumindest eine Eingriffsmethode durch Einschreiben eines Vorgabewerts oder einer Anweisung in ein entsprechendes Austauschdatenfeld in dem ersten Speicherbereich durchzuführen.

Zudem kann bei der Vorrichtung die Steuereinrichtung 12 ferner dazu eingerichtet sein, um die zumindest eine Eingriffsmethode basierend auf zumindest einem aus dem zumindest einen hinterlegten statischen Komponentenparameter, dem zumindest einen durch die Industrieanlagenkomponente zu erfassenden dynamischen Komponentenbetriebswert, und einer durch eine Synthesemethode zu generierenden Information durchzuführen.

Zudem kann bei der Vorrichtung die Empfangseinrichtung 21 ferner dazu eingerichtet sein, um einen Abruf eines dynamischen Komponentenbetriebswerts, einer durch eine Synthesemethode zu generierenden Information, und/oder einer Eingriffsmethode zu empfangen, und kann die Steuereinrichtung 12 ferner dazu eingerichtet sein, um den Abruf basierend auf dem Fähigkeitsverzeichnis zu verifizieren.

Zudem kann bei der Vorrichtung die Steuereinrichtung 12 ferner dazu eingerichtet sein, um bei Abruf eines dynamischen Komponentenbetriebswerts den dynamischen Komponentenbetriebswert aus einem entsprechenden Austauschdatenfeld in dem zweiten Speicherbereich auszulesen, wenn die Empfängerberechtigungsinformation bezüglich des dynamischen Komponentenbetriebswerts darauf hinweist, dass eine Quelle des Abrufs dazu berechtigt ist, bei Abruf einer durch eine Synthesemethode zu generierenden Information die Synthesemethode durchzuführen, wenn die Empfängerberechtigungsinformation bezüglich der Synthesemethode darauf hinweist, dass eine Quelle des Abrufs dazu berechtigt ist, und bei Abruf einer Eingriffsmethode die Eingriffsmethode durchzuführen, wenn die Empfängerberechtigungsinformation bezüglich der Eingriffsmethode darauf hinweist, dass eine Quelle des Abrufs dazu berechtigt ist.

Außerdem kann die Vorrichtung eine Sendeeinrichtung 23 umfassen, die dazu eingerichtet ist, um bei Abruf des dynamischen Komponentenbetriebswerts den dynamischen Komponentenbetriebswert an die Quelle des Abrufs zu senden, wenn die Empfängerberechtigungsinformation bezüglich des dynamischen Komponentenbetriebswerts darauf hinweist, dass die Quelle des Abrufs dazu berechtigt ist, und bei Abruf der durch eine Synthesemethode zu generierenden Information die Information an die Quelle des Abrufs zu senden, wenn die Empfängerberechtigungsinformation bezüglich der Synthesemethode darauf hinweist, dass eine Quelle des Abrufs dazu berechtigt ist.

Zudem kann bei der Vorrichtung die Sendeeinrichtung 23 und/oder die Empfangseinrichtung 21 dazu eingerichtet sein, um mittels einem Open-Platform-Communications-Unified-Architecture-Protokoll zu kommunizieren.

Zudem kann bei der Vorrichtung die Industrieanlagenkomponente eine Industrieanlagensubkomponente 86a aufweisen, die Industrieanlagensubkomponente 86a mit einer Vorrichtung 10a zur Ansteuerung und Verwaltung der Industrieanlagensubkomponente 86a verbunden sein, und die Steuereinrichtung ferner dazu eingerichtet sein, um die Vorrichtung 10a zur Ansteuerung und Verwaltung der Industrieanlagensubkomponente 86a basierend auf einem der Industrieanlagensubkomponente 86a zugeordneten Fähigkeitsverzeichnis einzubinden 92.

In beispielhaften Ausführungsbeispielen können einige der Funktionalitäten der in Figur 1 und/oder 2 veranschaulichten Vorrichtung zwischen zwei (oder mehr) physikalisch getrennten Geräten aufgeteilt sein, die zusammen eine Betriebseinheit bilden.

Entsprechend kann gemäß beispielhaften Ausführungsbeispielen der vorliegenden Erfindung das in Figur 3 veranschaulichte Verfahren wie folgt abgewandelt sein.

Bei dem Verfahren kann die Informationen mittels der Synthesemethode basierend auf dem zumindest einen dynamischen Komponentenbetriebswert und zumindest einem in dem Fähigkeitsverzeichnis hinterlegten statischen Komponentenparameter generiert werden.

Bei dem Verfahren kann das Fähigkeitsverzeichnis ferner ein Identifizierungszeichen der Industrieanlagenkomponente umfassen.

Bei dem Verfahren kann die Komponentenbetriebswertspezifizierung ferner einen Aktualisierungszyklus des dynamischen Komponentenbetriebswerts umfassen.

Bei dem Verfahren kann das Fähigkeitsverzeichnis ferner Empfängerberechtigungsinformation bezüglich zumindest einem dynamischen Komponentenbetriebswert, zumindest einer Synthesemethode, und/oder zumindest einer generierten Information, und/oder zumindest eine Eingriffsmethode zum Eingriff in einen Betrieb der Industrieanlagenkomponente und Empfängerberechtigungsinformation bezüglich zumindest der einen Eingriffsmethode umfassen.

Das Verfahren kann ferner ein Empfangen eines Schlüssels aufweisen, wobei der Schlüssel das Fähigkeitsverzeichnis und ein Identifizierungszeichen der Industrieanlagenkomponente umfasst.

Bei dem Verfahren kann der Schlüssel ferner eine Austauschdatenfeldspezifizierung für mit der Industrieanlagenkomponente auszutauschenden Daten umfassen.

Das Verfahren kann ferner ein Bereitstellen eines Schnittstellenspeichers mit einem ersten Speicherbereich, der durch die Industrieanlagenkomponente lesbar ist, und einem zweiten Speicherbereich, der durch die Industrieanlagenkomponente beschreibbar ist, ein Bereitstellen einer Schreibfähigkeit in den ersten Speicherbereich, und ein Bereitstellen einer Lesefähigkeit aus dem zweiten Speicherbereich aufweisen, wobei der erste Speicherbereich und der zweite Speicherbereich jeweils gemäß der Austauschdatenspezifizierung strukturiert ist, und die Austauschdatenfeldspezifizierung Austauschdatenfelder entsprechend in dem Fähigkeitsverzeichnis spezifizierten dynamischen Komponentenbetriebswerten umfasst.

Bei dem Verfahren kann die Austauschdatenfeldspezifizierung ferner Austauschdatenfelder entsprechend in dem Fähigkeitsverzeichnis spezifizierten Eingriffsmethoden umfassen. Das Verfahren kann zudem ein Durchführen der zumindest einen Eingriffsmethode durch Einschreiben eines Vorgabewerts oder einer Anweisung in ein entsprechendes Austauschdatenfeld in dem ersten Speicherbereich aufweisen.

Das Verfahren kann ferner ein Durchführen der zumindest einen Eingriffsmethode basierend auf zumindest einem aus dem zumindest einen hinterlegten statischen Komponentenparameter, dem zumindest einen durch die Industrieanlagenkomponente zu erfassenden dynamischen Komponentenbetriebswert, und einer durch eine Synthesemethode zu generierenden Information aufweisen.

Das Verfahren kann ferner ein Empfangen eines Abrufs eines dynamischen Komponentenbetriebswerts, einer durch eine Synthesemethode zu generierenden Information, und/oder einer Eingriffsmethode, und ein Verifizieren des Abrufs basierend auf dem Fähigkeitsverzeichnis aufweisen.

Das Verfahren kann ferner ein Auslesen, bei Abruf eines dynamischen Komponentenbetriebswerts, des dynamischen Komponentenbetriebswerts aus einem entsprechenden Austauschdatenfeld in dem zweiten Speicherbereich, wenn die Empfängerberechtigungsinformation bezüglich des dynamischen Komponentenbetriebswerts darauf hinweist, dass eine Quelle des Abrufs dazu berechtigt ist, ein Durchführen, bei Abruf einer durch eine Synthesemethode zu generierenden Information, der Synthesemethode, wenn die Empfängerberechtigungsinformation bezüglich der Synthesemethode darauf hinweist, dass eine Quelle des Abrufs dazu berechtigt ist, und ein Durchführen, bei Abruf einer Eingriffsmethode, der Eingriffsmethode, wenn die Empfängerberechtigungsinformation bezüglich der Eingriffsmethode darauf hinweist, dass eine Quelle des Abrufs dazu berechtigt ist, aufweisen.

Das Verfahren kann ferner ein Senden, bei Abruf des dynamischen Komponentenbetriebswerts, des dynamischen Komponentenbetriebswerts an die Quelle des Abrufs, wenn die Empfängerberechtigungsinformation bezüglich des dynamischen Komponentenbetriebswerts darauf hinweist, dass die Quelle des Abrufs dazu berechtigt ist, und ein Senden, bei Abruf der durch eine Synthesemethode zu generierenden Information, der Information an die Quelle des Abrufs, wenn die Empfängerberechtigungsinformation bezüglich der Synthesemethode darauf hinweist, dass eine Quelle des Abrufs dazu berechtigt ist, aufweisen.

Das Verfahren kann ferner ein Kommunizieren mittels eines Open-Platform-Communications-Unified-Architecture-Protokolls aufweisen.

Bei dem Verfahren kann die Industrieanlagenkomponente eine Industrieanlagensubkomponente aufweisen, und die Industrieanlagensubkomponente kann mit einer Vorrichtung zur Ansteuerung und Verwaltung der Industrieanlagensubkomponente verbunden sein. Das Verfahren kann zudem ein Einbinden der Vorrichtung zur Ansteuerung und Verwaltung der Industrieanlagensubkomponente basierend auf einem der Industrieanlagensubkomponente zugeordneten Fähigkeitsverzeichnis aufweisen.

Aspekte der vorliegenden Erfindung werden nachstehend detaillierter beschrieben.

Allgemein wird mit der vorliegenden Anmeldung ein umfassender Ansatz verfolgt, eine Smart Factory in all ihren Aspekten abzubilden, um eine geeignete Einflussnahme zu ermöglichen.

Dabei soll die Digitalisierung und Vernetzung insbesondere kleinerer und mittlerer Unternehmen unterstützt werden, wobei auf bestehenden Standards und Leitfäden für Industrie 4.0 aufgebaut werden soll, und eine konkrete, robuste Umsetzung geboten werden soll, die konsequent auf den Anforderungen des Mittelstands ausgerichtet ist.

Um dazu sowohl schnell greifbare Mehrwerte, wie z.B. Datentransparenz in der Produktion, zu erreichen, als auch die Möglichkeit für (spätere) Erweiterungen durch Cloud-Services zu ermöglichen, verknüpft der erfindungsgemäße Ansatz die Kommunikation von Industrie-4.0-Produkten innerhalb des Unternehmens als auch die geprüfte und gesicherte Verbindung zu dem System zugeordneten übergeordneten Servern und/oder Drittanbieter-Clouds. Industrie-4.0-Produkte können dabei Anlagen (z.B. Plasmaschneidanlagen), Vorrichtungen (z.B. Handling- und Transportsysteme) oder eigenständige Komponenten (z.B. Pumpen) sein. Industrie-4.0-Produkte werden durch eine Verwaltungsschale eingebunden, die durch die erfindungsgemäße Vorrichtung und das erfindungsgemäße Verfahren zur Ansteuerung und Verwaltung von Komponenten einer Industrieanlage bereitgestellt wird.

Eine Industrieanlage kann dabei die Maschinen, Anlagen und Vorrichtungen in einer Produktion sowie alle umgebenden Komponenten bis hin zum Fabrikgebäude (Technische Gebäudeausrüstung, TGA) umfassen, welche sich in Verbindung, in Abhängigkeit oder im Einfluss mit der Produktion befinden. Dies betrifft ebenfalls Komponenten zum Management von internen und externen Arbeitskräften (z.B. Zugangsrechte, Authentifizierung, Wartungsbestätigungen). Auch nicht-physische Komponenten können dabei Teil der Industrieanlage sein.

Die Industrie-4.0-Produkte selbst können wiederum Subsysteme (ebenfalls Industrie-4.0-Produkte) enthalten, die wieder eine erfindungsgemäße Verwaltungsschale besitzen.

Gemäß dem erfindungsgemäßen Konzept können im Zusammenhang mit der Industrieanlage mehrere Ebenen, beispielsweise vier Ebenen, definiert werden. In der vierteiligen Gliederung kann eine erste Ebene mit dem Systemkern verbundene Server und Clouds abbilden. Eine zweite Ebene kann eine der erfindungsgemäßen Verwaltungsschale übergeordnete Entität abbilden. Eine dritte Ebene kann die erfindungsgemäße Verwaltungsschale abbilden und befindet sich somit auf der Ebene von Anlagen/Vorrichtungen/Komponenten, wobei die Verwaltungsschale diesen übergeordnet bzw. vorangestellt ist. Eine vierte Ebene kann eine Verwaltungsschale auf Subsystemebene abbilden, also auf der Ebene von Subkomponenten der vorgenannten Anlagen/Vorrichtungen/Komponenten (wobei die Verwaltungsschale diesen übergeordnet ist). Die vierte Ebene kann also beispielsweise Komponenten in einer Anlage entsprechen.

Die durch die erfindungsgemäße Vorrichtung und das erfindungsgemäße Verfahren zur Ansteuerung und Verwaltung von Komponenten einer Industrieanlage bereitgestellte Verwaltungsschale bildet also eine dritte Ebene des erfindungsgemäßen Konzepts ab. Diese Verwaltungsschale auf Systemebene - d.h. Anlagen, Vorrichtungen und eigenständige Komponenten einer Smart Factory - stellt deren digitales Abbild dar und tauscht mit einer übergeordneten Entität die relevanten Informationen, entsprechend des Fähigkeitsverzeichnisses (auch Methodenliste genannt), aus. Auf der anderen Seite stellt die Verwaltungsschale die Schnittstelle zum realen System (Asset) dar und tauscht die Daten, z.B. mit der CNC oder PLC-Steuerung, über eine Schnittstelle aus, die über den vorstehend definierten Schnittstellenspeicher verfügen kann. Nach einem Implementierungsprozess des jeweiligen Systems wird die entsprechende Verwaltungsschale erzeugt, d.h., beispielsweise wird die erfindungsgemäße Vorrichtung erzeugt. Dies beinhaltet beispielsweise eine Installation bzw. Einrichtung der erfindungsgemäßen Funktionalitäten direkt auf der Steuerung einer Komponente selbst. Dies beinhaltet ferner beispielsweise eine Installation bzw. Einrichtung der erfindungsgemäßen Funktionalitäten bei einer zusätzlich zu der Steuerung der Komponente vorzusehenden Hardware. Die erfindungsgemäße Vorrichtung bzw. die erfindungsgemäßen Funktionalitäten können also einen Teil der Steuerung der Komponente (mit dieser integriert) oder einen Teil der zusätzlichen Hardware darstellen. Die Kommunikation wird wiederum beispielsweise auf Basis von OPC-UA realisiert. Die Assets sowie die Verwaltungsschalen besitzen eine eindeutige Identifizierung.

Optional kann die durch die erfindungsgemäße Vorrichtung und das erfindungsgemäße Verfahren zur Ansteuerung und Verwaltung von Komponenten einer Industrieanlage bereitgestellte Verwaltungsschale eine vierte Ebene des erfindungsgemäßen Konzepts abbilden. Die Verwaltungsschalen dieser Ebene bilden Industrie-4.0-Produkte ab, welche im Kontext eines größeren Systems (z.B. einer Anlage) verbaut sind.

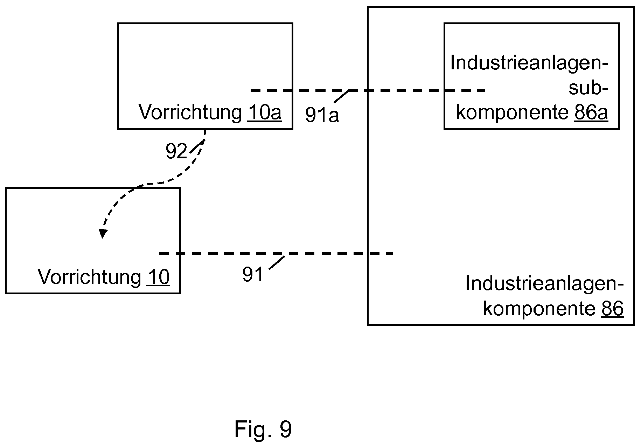

Figur 9 ist ein schematisches Diagramm, das einen Zusammenhang zwischen Industrieanlagenkomponenten und Industrieanlagensubkomponenten und den Industrieanlagenkomponenten und Industrieanlagensubkomponenten zugeordneten Vorrichtungen zur Ansteuerung und Verwaltung der jeweiligen Komponente gemäß beispielhafter Ausführungsbeispiele der vorliegenden Erfindung veranschaulicht.

Hierbei entspricht die Verwaltungsschale 10 der dritten Ebene, während die Verwaltungsschale 10a der vierten Ebene entspricht und in die Verwaltungsschale 10 der dritten Ebene eingebunden ist. Somit kann die Struktur einer Industrieanlagensubkomponente 86a einer Industrieanlagenkomponente 86 abgebildet werden.

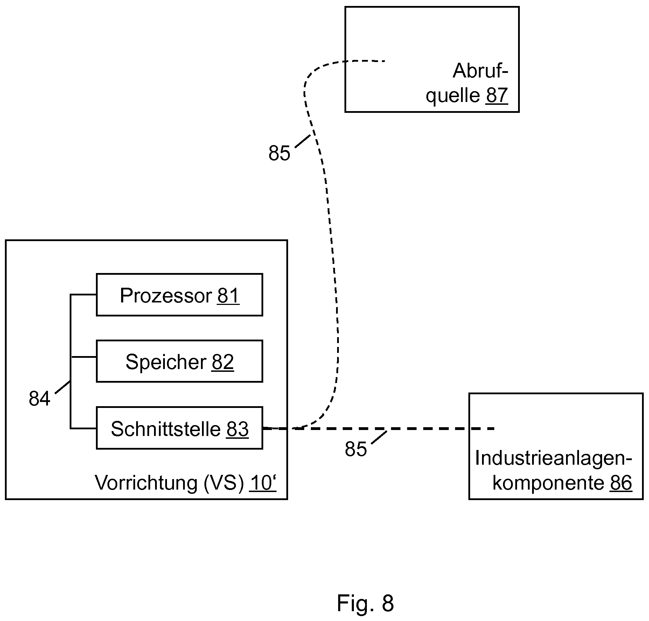

Diese Verschachtelung hat den Vorteil, dass Hersteller von Industrie-4.0-Produkten neben dem Hersteller der Gesamtanlage die Möglichkeit haben, Informationen über ihre spezifischen Komponenten zu erhalten. Eine Verwaltungsschale kann somit sowohl auf der dritten als auch auf der vierten Ebene liegen, je nachdem ob das Industrie-4.0-Produkt eigenständig in der Smart Factory verbaut ist, z.B. eine Pumpe, oder innerhalb eines übergeordneten Systems integriert ist. Der wesentliche Unterschied besteht darin, dass die Verwaltungsschale der dritten Ebene direkt mit der übergeordneten Entität verbunden ist (wie beispielsweise in Figur 8 veranschaulicht) und somit dort in der Konfiguration der Smart Factory angezeigt wird, während die Verwaltungsschale der vierten Ebene mit einer übergeordneten Verwaltungsschale der dritten Ebene verbunden ist. Die vierte Ebene kann zudem weiter verschachtelt werden, und weitere Subsysteme beinhalten. Beispielsweise enthält eine Schneidanlage (dritte Ebene) einen Linearantrieb (vierte Ebene), der einen Motor (vierte Ebene) beinhaltet, in welchem wiederum ein Sensor (vierte Ebene) verbaut ist. Die Kommunikation mit der jeweils übergeordneten Verwaltungsschale wird wiederum beispielsweise via OPC-UA realisiert.

Bei dem erfindungsgemäßen Konzept werden die Daten von verschiedenen Anlagen/Vorrichtungen/Komponenten konzentriert. Im Sinne von Industrie 4.0 und einer Smart Business World wird jedoch die Vernetzung verschiedener Datenbereiche angestrebt. Diese beinhalten unter anderem Maschinendaten (beispielsweise Anlagen/Vorrichtungen/Komponenten, aber auch Daten bezüglich Gebäudesteuerung), Personaldaten (z.B. Anlagenbediener, Bestätigung von Servicetechnikern, Bestätigung von Reinigungspersonal), und Werkstückdaten (z.B. via RFID-Tags).

Hierbei berücksichtigt das erfindungsgemäße Konzept, wie sich durch entsprechende Informationen am gezieltesten Mehrwerte erzielen lassen, statt alle möglichen Daten unkoordiniert aufzunehmen und z.B. an eine Cloud zu senden. Insbesondere werden dabei die folgenden Mehrwertfelder adressiert: Arbeits- und Ressourcenmanagement, Energieeffizienz, Maintenance, Qualitätssicherung, Arbeitssicherheit, und Supply Chain. Diese Mehrwertfelder sind jedoch nur beispielhaft genannt und schränken die Erfindung in keiner Weise ein. Insbesondere sind weitere Felder wie beispielsweise fertigungsbezogene Erkenntnisse umfasst, die sich auch noch durch zukünftige Entwicklungen ergeben können.

Detailliert betrifft vorliegende Erfindung ein System, welches die Erfassung von Daten einer Anlage, Vorrichtung oder Komponente, deren Verknüpfung mit weiteren Daten und Parametern, und die Verarbeitung in einem Fähigkeitsverzeichnis (Methodenliste) sowie den Austausch der entstandenen Informationen mit weiteren Systemen ermöglicht.

Die durch die erfindungsgemäße Vorrichtung und das erfindungsgemäße Verfahren zur Ansteuerung und Verwaltung von Komponenten einer Industrieanlage bereitgestellte Verwaltungsschale besitzt dazu eine Schnittstelle zur Anlage/Vorrichtung/Komponente, eine für die spezifische Verwaltungsschale generierte Methodenliste (Fähigkeitsverzeichnis) sowie ein beispielsweise auf Open Platform Communications Unified Architecture (OPC UA) basierendes Verfahren zur Kommunikation der Informationen. OPC UA ist dabei ein industrielles Maschine-zu-Maschine-Protokoll.

Gemäß beispielhaften Ausführungsbeispielen der Erfindung wird die spezifische Methodenliste einer Verwaltungsschale in einem Verfahren zur Implementierung erzeugt. Diese definiert, welche Informationen das Asset, repräsentiert durch die Verwaltungsschale, in der Smart Factory zur Verfügung stellt. Zudem ist dabei beispielsweise definiert, in welcher Frequenz die Daten geliefert werden und von wem (z.B. Applikationen) die verschiedenen Informationen weiterverwendet werden dürfen.

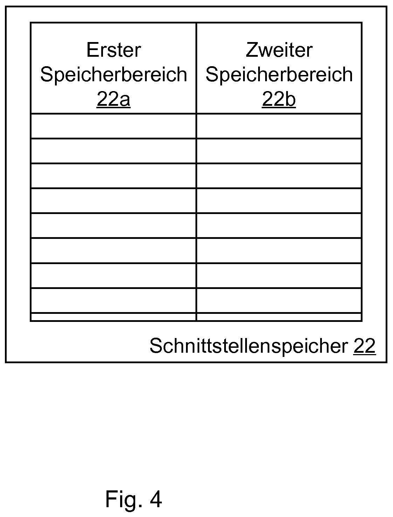

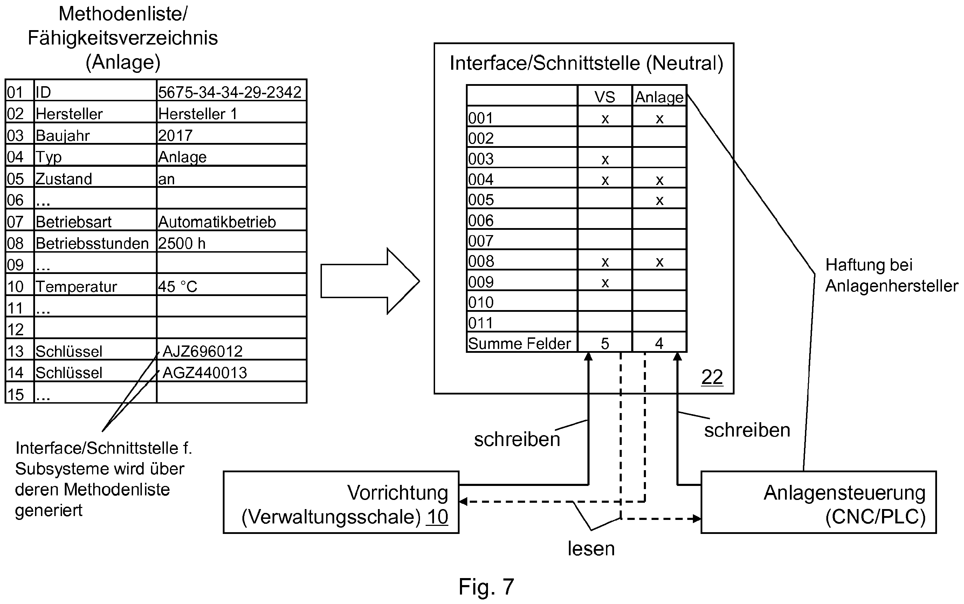

Die oben genannte Schnittstelle (beispielsweise Figur 4, Figur 7) mit seinen zwei Bereichen dient als neutrale Schnittstelle zwischen der Verwaltungsschale und der Steuerung (z.B. CNC, PLC). Es ermöglicht so, die gewünschten Aktionen des Assets umzusetzen, ohne dabei direkt in die Steuerungen einzugreifen.

Somit lässt sich die Haftungsfrage zwischen der erfindungsgemäßen Verwaltungsschale und der Steuerung (Anlagenhersteller) klar regeln.

Bei der erfindungsgemäßen Schnittstelle gibt es zwei getrennte Bereiche (beispielsweise erster Speicherbereich und zweiter Speicherbereich eines Schnittstellenspeichers, wobei der Schnittstellenspeicher durch einen physikalisch zusammenhängenden Speicher oder durch zwei oder mehrere physikalisch voneinander getrennte Speicherelemente ausgebildet sein kann), in denen jeweils die Verwaltungsschale bzw. die Steuerung ihre Daten schreiben, im jeweils anderen Bereich kann die Verwaltungsschale bzw. die Steuerung nur Daten lesen. Dies bedeutet konkret, dass die Verwaltungsschale nur Empfehlungen bzw. konkrete Anweisungen gibt und die Steuerung selber entscheiden muss, ob diese umgesetzt werden. Beispielsweise gibt eine Applikation die Empfehlung bzw. konkrete Anweisung, eine Anlage abzuschalten. Über die übergeordnete Entität und die Verwaltungsschale des Assets wird dies in das entsprechende Datenfeld der Schnittstelle (auf Seite der Verwaltungsschale) geschrieben (siehe Figur 7). Die Steuerung der Anlage liest diese Daten und setzt den Abschaltvorgang um.

Auch die Lieferung der Daten durch das Asset wird mittels der erfindungsgemäßen Schnittstelle (Schnittstellenspeicher) gemäß dem genannten Prinzip umgesetzt.

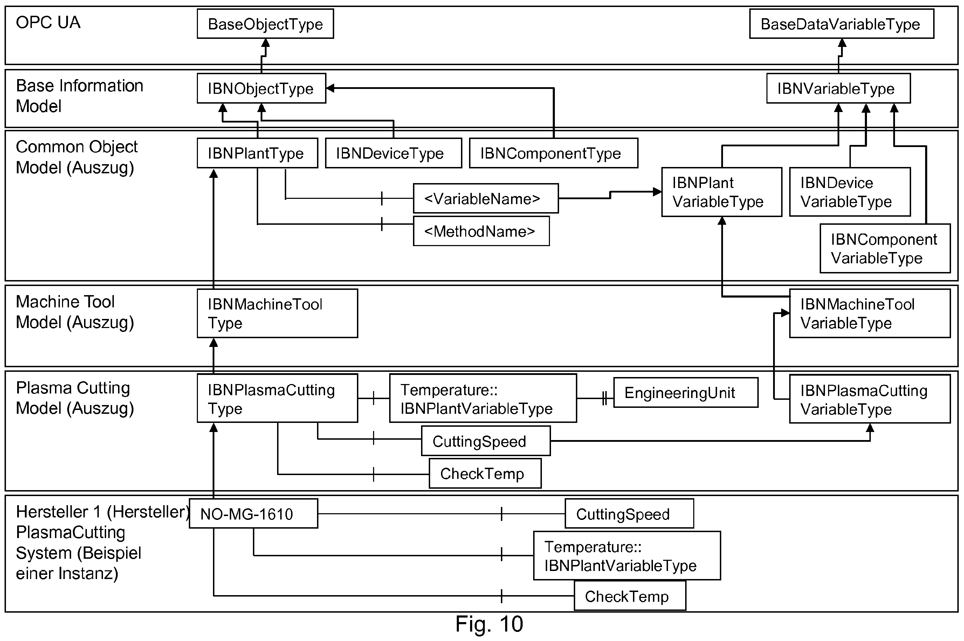

Die Datenfelder der Schnittstelle werden auf Basis eines Verfahrens zur Implementierung einer Methodenliste (Fähigkeitsverzeichnis) erzeugt. Dies bedeutet, dass die Steuerung (Asset/Industrieanlagenkomponente) auch für jedes Feld entsprechende Daten liefern muss. Im Rahmen des Verfahrens kann zudem bestimmt werden, in welchem Zyklus die Daten geliefert werden (als Beispiel für die Komponentenbetriebswertspezifizierung). Die Kommunikation der Verwaltungsschale basiert bevorzugt auf OPC UA. Um die Struktur der Methodenliste im Datenmodell von OPC UA abbilden zu können, muss das Standard-Datenmodell mit den Daten und Methoden aus der Methodenliste erweitert werden. Figur 10 zeigt ein Ergebnis einer entsprechenden Erweiterung des Standard-Datenmodells. Auf oberster Ebene sind die durch OPC UA vorgegebenen Elemente. Über ein Informationsmodell wird dieses für jede Kategorie (Anlage/Vorrichtung/Komponente) definiert.

Davon abgeleitet ergibt sich der konkrete Typ für eine bestimmte Herstellerklasse (z.B. Werkzeugmaschinen und daraufhin Plasmaschneidanlagen). Die Variablen (z.B. CuttingSpeed und Temperature) und Methoden (z.B. CheckTemp) bilden die entsprechenden Parameter, Daten und Methoden aus der Methodenliste ab. Daraus ergibt sich dann die spezifische Instanz mit den konkreten Werten.

Schließlich wird das im Implementierungsprozess generierte Fähigkeitsverzeichnis (Methodenliste) auf einer übergeordneten Entität hinterlegt. Wenn das Asset mit der Verwaltungsschale dieser Methodenliste an einer übergeordneten Entität installiert wird, wird ein Abbild der Methodenliste in die übergeordnete Entität heruntergeladen. Somit weiß die übergeordnete Entität, welche Informationen und Methoden mit der entsprechenden Verwaltungsschale ausgetauscht werden können und in welchem Zyklus die Daten geliefert werden.

Die Fähigkeitsverzeichnisse (Methodenlisten) gemäß beispielhaften Ausführungsbeispielen der vorliegenden Erfindung dienen dazu, die (standardisierten) Daten, welche die Anlagen/Vorrichtungen/Komponenten über die Schnittstelle (den Schnittstellenspeicher) an die Verwaltungsschale liefern, durch spezifische Methoden zu validieren und daraus Informationen, die für die Interoperabilität, den sicheren und robusten Datenaustausch und die Mehrwertfelder relevant sind, zu schaffen.

Methodenverzeichnisse (Methodenlisten, Fähigkeitsverzeichnisse) enthalten alle gemäß dem erfindungsgemäßen Konzept verwendbaren Daten, Parameter, Methoden, Formeln, Formate sowie deren Beziehungen untereinander beispielsweise auf Basis bestehender Normen, Gesetze und Vorschriften in strukturierter Form. Das Verzeichnis dient somit als Basis für die im Wissensbereich einer Smart Factory notwendigen Informationen.

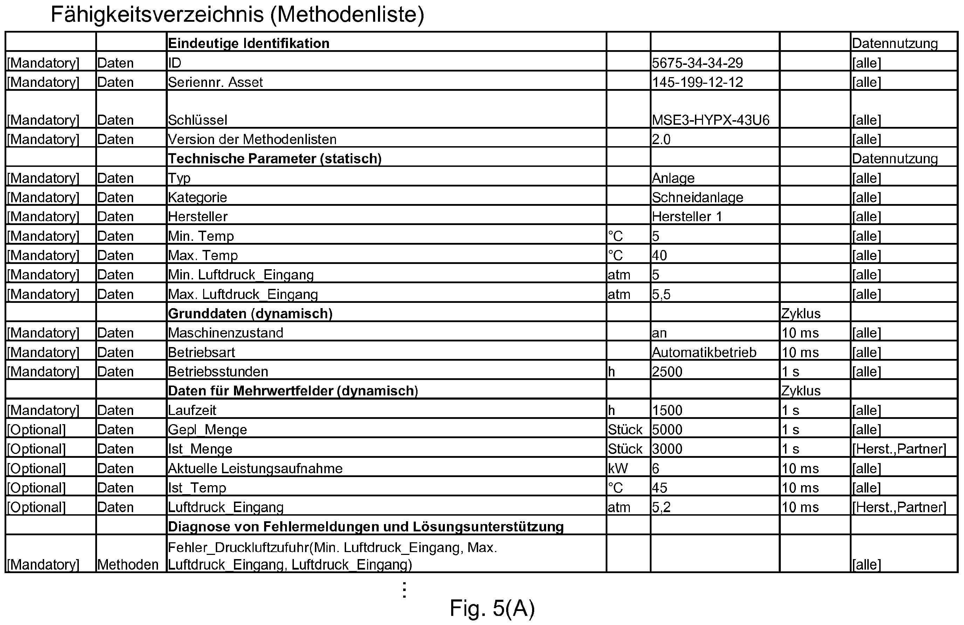

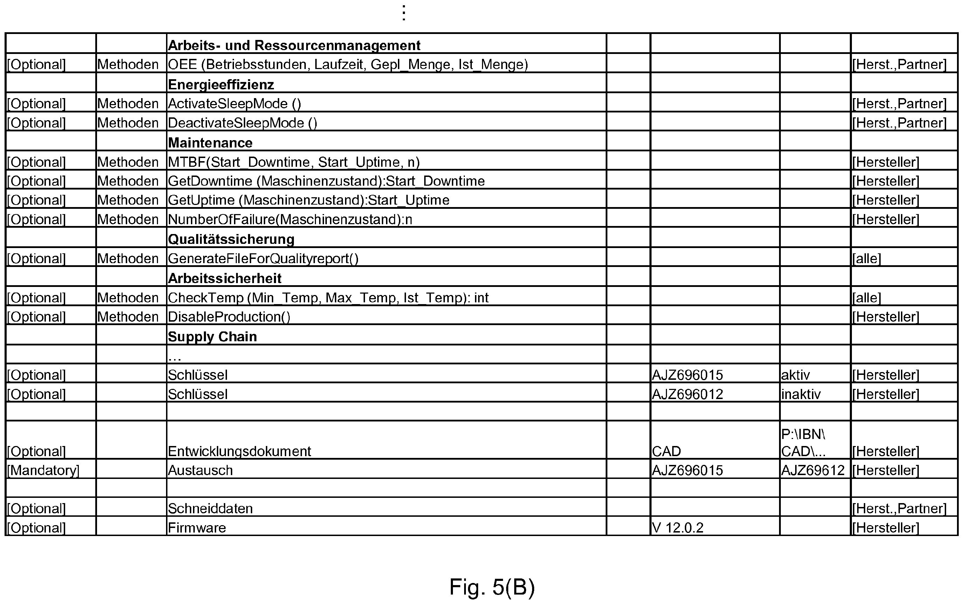

Figur 5 ist ein schematisches Diagramm, das ein Fähigkeitsverzeichnis gemäß beispielhafter Ausführungsbeispiele der vorliegenden Erfindung veranschaulicht.

Die in Figur 5 veranschaulichte Methodenliste stellt dabei lediglich ein Beispiel einer möglichen Methodenliste (Fähigkeitsverzeichnis) dar, das dem Verständnis der vorliegenden Erfindung dient. Erfindungsgemäße Fähigkeitsverzeichnisse sind weder auf die angegebenen einzelnen Felder noch auf die jeweiligen Feldinhalte beschränkt. Insbesondere kann eine tatsächliche Implementierung mehr oder weniger Felder als gezeigt sowie von den gezeigten Felder abweichende Felder aufweisen.

Gemäß Figur 5 kann die Methodenliste die Bereiche "Eindeutige Identifikation", "Technische Parameter (statisch)", "Grunddaten (dynamisch)", "Daten für Mehrwertfelder (dynamisch, mit definierter Zykluszeit)", "Methoden (Fehlermeldungen, Arbeits- und Ressourcenmanagement, Energieeffizienz, Maintenance, Qualitätssicherung, Arbeitssicherheit, Supply Chain)", "Verweis auf Subsysteme", "Lebenszyklusdaten (z.B. Entwicklungsdaten, Austausch)", und/oder "Technologie- und Servicedaten (spezifische Daten für den direkten Austausch zwischen Assets)" umfassen.

Die Technischen Parameter sind dabei ein Beispiel der Komponentenparameter.

Die Grunddaten und die Daten für Mehrwertfelder sind dabei Beispiele für die dynamischen Komponentenbetriebswerte.

Die Methoden sind dabei Beispiele für die Synthesemethoden.

Wie in Figur 5 dargestellt, umfasst der Bereich "Eindeutige Identifikation" beispielsweise die Felder ID, Seriennummer des Assets, Schlüssel, und Version der Methodenlisten/Fähigkeitsverzeichnisse.

Ferner umfasst der Bereich "Technische Parameter" beispielsweise die Felder Typ, Kategorie, Hersteller, Minimaltemperatur, Maximaltemperatur, Minimalluftdruck am Eingang, und Maximalluftdruck am Eingang.

Ferner umfasst der Bereich "Grunddaten" beispielsweise die Felder Maschinenzustand, Betriebsart, Betriebsstunden.

Ferner umfasst der Bereich "Daten für Mehrwertfelder" beispielsweise die Felder Laufzeit, Geplante Menge, ist-Menge, Aktuelle Leistungsaufnahme, Ist-Temperatur, und Luftdruck am Eingang.

Ferner umfasst der Bereich "Methoden" beispielsweise die Felder bzw. beispielhaften Synthesemethoden "Fehler_Druckluftzufuhr(Min. Luftdruck_Eingang, Max. Luftdruck_Eingang, Luftdruck_Eingang)", "OEE (Betriebsstunden, Laufzeit, Gepl_Menge, Ist_Menge)", "ActivateSleepMode ()", "DeactivateSleepMode ()", "MTBF(Start_Downtime, Start_Uptime, n)", "GetDowntime (Maschinenzustand):Start_Downtime", "GetUptime (Maschinenzustand): Start_Uptime",
"NumberOfFailure(Maschinenzustand):n", "GenerateFileForQualityreport()", und "CheckTemp (Min_Temp, Max_Temp, Ist_Temp): int", "DisableProduction()", und somit Methoden zur Bestimmung von angereicherten Informationen (z.B. "Fehler_Druckluftzufuhr(Min. Luftdruck_Eingang, Max. Luftdruck_Eingang, Luftdruck_Eingang)") und auch Methoden zum Eingriff in das entsprechende Asset/Industrieanlagenkomponente (z.B. "ActivateSleepMode ()").

Die Synthesemethoden können ferner die Identifikation sowohl eines Ursprungs einer Abfrage als auch der Industrieanlagenkomponente umfassen. Ferner können die Synthesemethoden die Verifizierung von Daten, Werten, Parametern, und Informationen umfassen.

Jedem der oben genannten Felder können Informationen bezüglich einer Zugriffs- bzw. Nutzungsberechtigung zugefügt sein. Dies ermöglich eine Kontrolle darüber, wer bzw. was (z.B. Abrufquellen 87) auf Daten zugreifen, diese empfangen, und/oder in den Betriebsablauf der Industrieanlagenkomponente eingreifen darf.

Dabei können die Berechtigungsinformationen in verschiedenen Granulierungen vorliegen, beispielsweise auf einer groben Ebene der Hersteller von Komponenten/Applikationen oder auf einer sehr feinen Ebene einzeln identifizierter Komponenten.

Zusätzlich dienen die Methodenlisten (Fähigkeitsverzeichnisse) der Erzeugung eines Schlüssels mit der spezifischen Methodenliste. Ferner wird daraus die vorstehend beschriebene Schnittstelle (Maschinensteuerung - Verwaltungsschale) erzeugt. Durch eine automatische Generierung dieser Elemente aus derselben Datenbasis wird eine Konsistenz sichergestellt und erleichtert somit auch die Prüfbarkeit, weil die Methodenliste sowohl bei der erfindungsgemäßen Verwaltungsschale, der vorstehend genannten übergeordneten Entität, und einem dem System zugeordneten übergeordneten Server abgelegt wird.

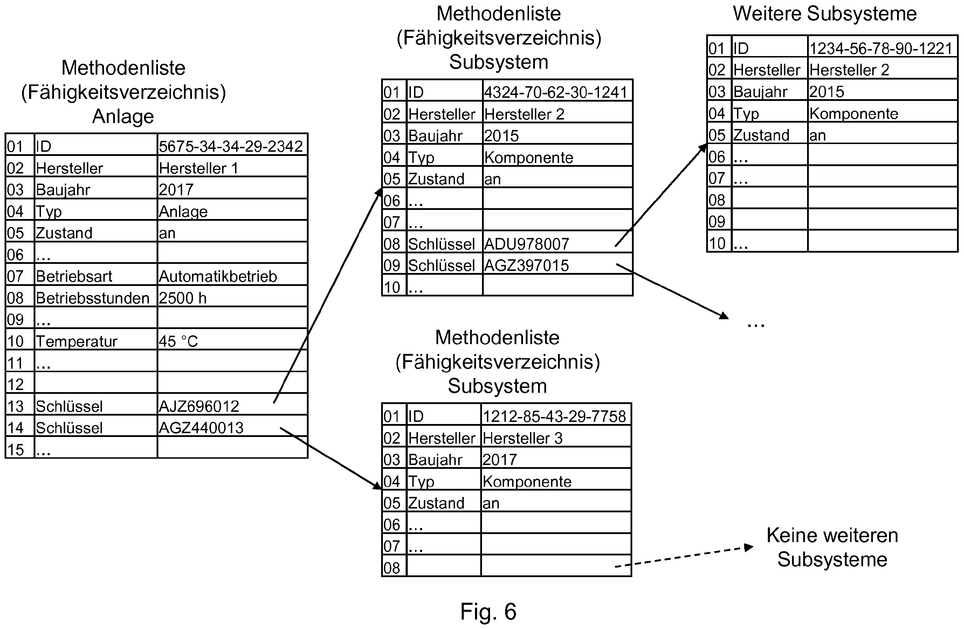

Die vorstehend thematisierte mögliche Einbindung von Industrieanlagensubkomponenten bzw. Verschachtelung von Subsystemen innerhalb einer Anlage spiegelt sich auch in den Fähigkeitsverzeichnissen (Methodenlisten) wider und ist in Figur 6 dargestellt. Insbesondere ist Figur 6 ein schematisches Diagramm, das einen Zusammenhang zwischen Industrieanlagenkomponenten und Industrieanlagensubkomponenten zugeordneten Fähigkeitsverzeichnissen gemäß beispielhafter Ausführungsbeispiele der vorliegenden Erfindung veranschaulicht.

Im Laufe des Anlagenlebenszyklus kann es häufiger vorkommen, dass Updates/Upgrades der Firmware einzelner Subsysteme zur Verfügung stehen. Da der Anlagenhersteller für das Gesamtsystem verantwortlich ist, muss durch ihn freigegeben werden, ob diese Updates der Subsysteme durchgeführt werden dürfen. Zusätzlich kann der Betreiber der Anlage entscheiden, ob er die Updates installieren möchte. Die durch das erfindungsgemäße Konzept ermöglichte Verschachtelung der Methodenlisten (und somit der Verwaltungsschalen bzw. der diese bereitstellenden Vorrichtungen und Verfahren der vorliegenden Erfindung) ermöglicht prinzipiell die Anweisung zur Durchführung von weiteren Aktionen durch die Subsysteme (z.B. Abschalten eines Motors innerhalb einer Anlage). Diese Möglichkeit ist bewusst offen gestaltet, um zukünftige Szenarien realisieren zu können. In diesem Fall muss jedoch (durch den Anlagenhersteller) klar geregelt sein, welche Anweisungen von Applikationen außerhalb der eigenen Steuerung an Subsysteme in der Anlage gegeben werden dürfen.

Die vorstehend beschriebenen Verfahren und Funktionalitäten können durch jeweilige funktionale Elemente, Prozessoren, oder dergleichen umgesetzt werden, wie nachstehend beschrieben wird.

Vorstehend wurden bei der beispielhaften Beschreibung der Vorrichtungen lediglich die Elemente beschrieben, die für das Verständnis der Prinzipien der Erfindung relevant sind. Die Vorrichtungen können jedoch noch weitere Elemente aufweisen, die für deren jeweiligen Betrieb notwendig sind. Eine Beschreibung solcher Elemente wurde in dieser Beschreibung für ein erleichtertes Verständnis weggelassen. Die Anordnung der funktionalen Blöcke in den Figuren soll die Erfindung nicht beschränken, und die entsprechenden Funktionen können durch einen Block umgesetzt werden oder auf weitere Unterblöcke aufgeteilt sein.

Wenn vorstehend definiert ist, dass eine Vorrichtung (oder eine andere Einrichtung) dazu eingerichtet ist, um eine Funktion auszuführen, dann ist dies als äquivalent zu einer Beschreibung auszulegen, dergemäß (zumindest) ein Prozessor oder eine entsprechende Schaltung, potentiell in Kooperation mit in einem Speicher der jeweiligen Vorrichtung gespeichertem Computerprogramm-Code, dazu eingerichtet ist, um die Vorrichtung dazu zu bringen, zumindest die Funktion durchzuführen bzw. darzustellen.

In Figur 8 ist eine alternative Veranschaulichung von Vorrichtungen gemäß beispielhaften Ausführungsbeispielen der vorliegenden Erfindung. Wie in Figur 8 gezeigt, umfasst die Vorrichtung 10' (entsprechend der Vorrichtung 10) (mindestens) einen Prozessor 81, (mindestens) einen Speicher 82, und (mindestens) eine Schnittstelle 83, die mittels eines Busses 84 oder dergleichen miteinander verbunden sind. Die Vorrichtung 10' kann mittels Verbindungen 85 jeweils mit anderen Vorrichtungen oder Einrichtungen (z.B. Industrieanlagenkomponente 86, Abrufquelle 87) verbunden sein. Dabei können die Verbindungen zu anderen Vorrichtungen mittels einer (derselben) Schnittstelle (wie in Figur 8 veranschaulicht) oder abweichend davon mittels unterschiedlichen, jeweilig zugeordneten Schnittstellen bereitgestellt werden.

Gemäß beispielhaften Ausführungsbeispielen der vorliegenden Erfindung umfasst eine Vorrichtung zur Ansteuerung und Verwaltung einer Industrieanlagenkomponente also zumindest einen Prozessor 81, zumindest einen Speicher 82 einschließlich einem Computerprogramm-Code, und zumindest eine Schnittstelle 83, die zur Kommunikation mit zumindest einer anderen Vorrichtung eingerichtet ist. Der zumindest eine Prozessor mit dem zumindest einen Speicher und dem Computerprogramm-Code ist dazu eingerichtet, um ein Speichern eines Fähigkeitsverzeichnisses (daher umfasst die Vorrichtung eine entsprechende Einrichtung zum Speichern) und ein Generieren (daher umfasst die Vorrichtung eine entsprechende Einrichtung zum Generieren) von Informationen für eine Ansteuerung und/oder Verwaltung der Industrieanlagenkomponente mittels einer aus der zumindest einen durch das Fähigkeitsverzeichnis umfassten Synthesemethode durchzuführen.

Für weitere Details bezüglich des Betriebs bzw. Funktionalitäten der einzelnen Vorrichtungen wird auf die vorstehende Beschreibung in Kombination mit Figuren 1 bis 7, 9 und 10 verwiesen.

In Hinblick auf das Obige sind Maßnahmen bzw. Mittel zur Realisierung einer Ansteuerung und Verwaltung von Komponenten einer Industrieanlage bereitgestellt. Solche Maßnahmen bzw. Mittel umfassen beispielhaft ein Speichern eines Fähigkeitsverzeichnisses, wobei das Fähigkeitsverzeichnis zumindest einen hinterlegten statischen Komponentenparameter, der für eine Eigenschaft der Industrieanlagenkomponente steht, eine Komponentenbetriebswertspezifizierung zumindest eines durch die Industrieanlagenkomponente zu erfassenden dynamischen Komponentenbetriebswerts, der für einen Zustand der Industrieanlagenkomponente steht, und zumindest eine Synthesemethode zur Generierung von Informationen basierend auf zumindest einem durch das Fähigkeitsverzeichnis spezifizierten dynamischen Komponentenbetriebswert aufweist, und ein Generieren, mittels einer aus der zumindest einen Synthesemethode, von Informationen für eine Ansteuerung und/oder Verwaltung der Industrieanlagenkomponente.

## Patentansprüche

1. Verfahren zur Ansteuerung und Verwaltung einer Industrieanlagenkomponente, mit
einem Speichern eines Fähigkeitsverzeichnisses, wobei das Fähigkeitsverzeichnis umfasst
zumindest einen hinterlegten statischen Komponentenparameter, der für eine Eigenschaft der Industrieanlagenkomponente steht,
eine Komponentenbetriebswertspezifizierung zumindest eines durch die Industrieanlagenkomponente zu erfassenden dynamischen Komponentenbetriebswerts, der für einen Zustand der Industrieanlagenkomponente steht, und
zumindest eine Synthesemethode zur Generierung von Informationen basierend auf zumindest einem durch das Fähigkeitsverzeichnis spezifizierten dynamischen Komponentenbetriebswert, und
einem Generieren, mittels einer aus der zumindest einen Synthesemethode, von Informationen für eine Ansteuerung und/oder Verwaltung der Industrieanlagenkomponente.

2. Verfahren nach Anspruch 1, wobei
die Informationen mittels der Synthesemethode basierend auf dem zumindest einen dynamischen Komponentenbetriebswert und zumindest einem in dem Fähigkeitsverzeichnis hinterlegten statischen Komponentenparameter generiert wird.

3. Verfahren nach Anspruch 1 oder 2, wobei
das Fähigkeitsverzeichnis ferner umfasst
ein Identifizierungszeichen der Industrieanlagenkomponente.

4. Verfahren nach einem der Ansprüche 1 bis 3, wobei die Komponentenbetriebswertspezifizierung ferner einen Aktualisierungszyklus des dynamischen Komponentenbetriebswerts umfasst.

5. Verfahren nach einem der Ansprüche 1 bis 4, wobei
das Fähigkeitsverzeichnis ferner umfasst
Empfängerberechtigungsinformation bezüglich zumindest einem dynamischen Komponentenbetriebswert, zumindest einer Synthesemethode, und/oder zumindest einer generierten Information, und/oder
zumindest eine Eingriffsmethode zum Eingriff in einen Betrieb der Industrieanlagenkomponente und Empfängerberechtigungsinformation bezüglich zumindest der einen Eingriffsmethode.

6. Verfahren nach einem der Ansprüche 1 bis 5, ferner mit
einem Empfangen eines Schlüssels, wobei der Schlüssel umfasst das Fähigkeitsverzeichnis, und
ein Identifizierungszeichen der Industrieanlagenkomponente.

7. Verfahren nach Anspruch 6, wobei
der Schlüssel ferner umfasst
eine Austauschdatenfeldspezifizierung für mit der Industrieanlagenkomponente auszutauschenden Daten.

8. Verfahren nach Anspruch 7, ferner mit
einem Bereitstellen eines Schnittstellenspeichers mit einem ersten Speicherbereich, der durch die Industrieanlagenkomponente lesbar ist, und einem zweiten Speicherbereich, der durch die Industrieanlagenkomponente beschreibbar ist,
einem Bereitstellen einer Schreibfähigkeit in den ersten Speicherbereich,
einem Bereitstellen einer Lesefähigkeit aus dem zweiten Speicherbereich, wobei
der erste Speicherbereich und der zweite Speicherbereich jeweils gemäß der Austauschdatenspezifizierung strukturiert ist, und
die Austauschdatenfeldspezifizierung Austauschdatenfelder entsprechend in dem Fähigkeitsverzeichnis spezifizierten dynamischen Komponentenbetriebswerten umfasst.

9. Verfahren nach Anspruch 8, wobei
die Austauschdatenfeldspezifizierung ferner Austauschdatenfelder entsprechend in dem Fähigkeitsverzeichnis spezifizierten Eingriffsmethoden umfasst, und das Verfahren ferner umfasst
ein Durchführen der zumindest einen Eingriffsmethode durch Einschreiben eines Vorgabewerts oder einer Anweisung in ein entsprechendes Austauschdatenfeld in dem ersten Speicherbereich.

10. Verfahren nach Anspruch 9, ferner mit
einem Durchführen der zumindest einen Eingriffsmethode basierend auf zumindest einem aus dem zumindest einen hinterlegten statischen Komponentenparameter, dem zumindest einen durch die Industrieanlagenkomponente zu erfassenden dynamischen Komponentenbetriebswert, und einer durch eine Synthesemethode zu generierenden Information.

11. Verfahren nach einem der Ansprüche 6 bis 10, ferner mit
einem Empfangen eines Abrufs eines dynamischen Komponentenbetriebswerts, einer durch eine Synthesemethode zu generierenden Information, und/oder einer Eingriffsmethode, und
einem Verifizieren des Abrufs basierend auf dem Fähigkeitsverzeichnis.

12. Verfahren nach Anspruch 11, ferner mit
einem Auslesen, bei Abruf eines dynamischen Komponentenbetriebswerts, des dynamischen Komponentenbetriebswerts aus einem entsprechenden Austauschdatenfeld in dem zweiten Speicherbereich, wenn die Empfängerberechtigungsinformation bezüglich des dynamischen Komponentenbetriebswerts darauf hinweist, dass eine Quelle des Abrufs dazu berechtigt ist,
einem Durchführen, bei Abruf einer durch eine Synthesemethode zu generierenden Information, der Synthesemethode, wenn die Empfängerberechtigungsinformation bezüglich der Synthesemethode darauf hinweist, dass eine Quelle des Abrufs dazu berechtigt ist, und
einem Durchführen, bei Abruf einer Eingriffsmethode, der Eingriffsmethode, wenn die Empfängerberechtigungsinformation bezüglich der Eingriffsmethode darauf hinweist, dass eine Quelle des Abrufs dazu berechtigt ist.

13. Verfahren nach Anspruch 12, ferner mit
einem Senden, bei Abruf des dynamischen Komponentenbetriebswerts, des dynamischen Komponentenbetriebswerts an die Quelle des Abrufs, wenn die Empfängerberechtigungsinformation bezüglich des dynamischen Komponentenbetriebswerts darauf hinweist, dass die Quelle des Abrufs dazu berechtigt ist, und
einem Senden, bei Abruf der durch eine Synthesemethode zu generierenden Information, der Information an die Quelle des Abrufs, wenn die Empfängerberechtigungsinformation bezüglich der Synthesemethode darauf hinweist, dass eine Quelle des Abrufs dazu berechtigt ist.

14. Verfahren nach Anspruch 13, ferner mit
einem Kommunizieren mittels eines Open-Platform-Communications-Unified-Architecture-Protokolls.

15. Verfahren nach einem der Ansprüche 1 bis 14, wobei
die Industrieanlagenkomponente eine Industrieanlagensubkomponente aufweist, und
die Industrieanlagensubkomponente mit einer Vorrichtung zur Ansteuerung und Verwaltung der Industrieanlagensubkomponente verbunden ist, und wobei das Verfahren umfasst
Einbinden der Vorrichtung zur Ansteuerung und Verwaltung der Industrieanlagensubkomponente basierend auf einem der Industrieanlagensubkomponente zugeordneten Fähigkeitsverzeichnis.

16. Vorrichtung zur Ansteuerung und Verwaltung einer Industrieanlagenkomponente, mit
einem Speicher, der dazu eingerichtet ist, um ein Fähigkeitsverzeichnis zu speichern, wobei das Fähigkeitsverzeichnis umfasst
zumindest einen hinterlegten statischen Komponentenparameter, der für eine Eigenschaft der Industrieanlagenkomponente steht,
eine Komponentenbetriebswertspezifizierung zumindest eines durch die Industrieanlagenkomponente zu erfassenden dynamischen Komponentenbetriebswerts, der für einen Zustand der Industrieanlagenkomponente steht, und
zumindest eine Synthesemethode zur Generierung von Informationen basierend auf zumindest einem durch das Fähigkeitsverzeichnis spezifizierten dynamischen Komponentenbetriebswert, und mit
einer Steuereinrichtung, die dazu eingerichtet ist, um mittels einer aus der zumindest einen Synthesemethode Informationen für eine Ansteuerung und/oder Verwaltung der Industrieanlagenkomponente zu generieren.

17. Computerprogrammprodukt mit einem computerausführbaren Computerprogramm-Code, der, wenn das Programm auf einem Computer ausgeführt wird, dazu eingerichtet ist, um den Computer dazu zu bringen, das Verfahren nach einem der Ansprüche 1 bis 15 auszuführen, wobei optional
das Computerprogrammprodukt ein computerlesbares Medium umfasst, auf dem der computerausführbare Computerprogramm-Code gespeichert ist, und/oder wobei das Programm direkt in einen internen Speicher des Computers oder einen Prozessor des Computers ladbar ist.
